# EUROPEAN PATENT SPECIFICATION

(11) **EP 2 246 235 B1**
(45) Date of publication and mention of the grant of the patent: **23.11.2011**
(21) Application number: 10160776.0
(22) Date of filing: 22.04.2010
(51) Int. Cl.: B62B 3/14

(54) **Seating device for a trolley**
Sitzvorrichtung für Schiebewagen
Siège pour un chariot

(30) Priority: 29.04.2009 IT UD20090082
(43) Date of publication of application: 03.11.2010
(73) Proprietor: PTA Group SRL, 24121 Bergamo (IT)
(72) Inventor: Giannini, Laura, 20060 Truccazzano (MI) (IT)
(74) Representative: Petraz, Gilberto Luigi

(56) References cited:
- DE-U1- 9 202 264
- GB-A- 2 266 556
- US-A- 4 834 404
- US-A- 4 971 343
- US-A- 5 330 210

## Description

### FIELD OF THE INVENTION

The present invention concerns a seating device for a trolley for transporting materials, for example a shopping trolley, to allow a child to sit in. In particular, the device according to the present invention can be assembled on the trolley.

### BACKGROUND OF THE INVENTION

Trolleys are known for transporting materials, objects or goods, provided with a containing basket sliding on wheels with respect to the ground. Shopping trolleys are also known, in which, on one of the walls of the containing basket, a folding chair is made, in which a child can sit.

In such known trolleys, the child is normally in an uncomfortable position, and since he is practically inside the containing basket, he tends to touch and play with the goods deposited in the containing basket, with the risk of breaking them.

Shopping trolleys are also known that have an integrated child's seat, conformed to define a toy-vehicle. In such known trolleys, the toy-vehicle substantially has a structural continuity with, but is distinct from, the containing basket.

Such known trolleys provided with a toy-seat, although they allow the child to play while the adult is choosing and purchasing the products, have a basket for containing the products which are quite small compared with trolleys of the traditional type.

The production of this type of known trolleys must be specific and outside the traditional standards; they need dedicated production lines with a relative increase in the production costs.

Moreover, since the toy-vehicle is integrated into the shopping trolley and substantially structurally continuous with the containing basket, if it is broken it may be necessary to dispose of the whole trolley.

US 4 971 343 discloses a seating device with all the features of the preamble of claim 1.

One purpose of the present invention is to achieve a seating device for a trolley that on the one hand allows the child to play while the adult is choosing the products, limiting the risk that he might touch or break the products chosen, and on the other hand guarantees the normal containing capacity of traditional trolleys.

Another purpose of the present invention is to achieve a seating device that is simple and economical to make and that can be individually replaced or repaired without compromising the functionality of the trolley.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a seating device according to the present invention is applied to a trolley, for example a shopping trolley, to allow a child to be seated in it.

In particular, the seating device comprises a seating portion on which the child is put to sit.

According to a characteristic feature of the present invention, the seating device comprises at least a support frame on which the seating portion is housed, and provided with anchoring means.

The anchoring means are of the adjustable type, and are conformed so as to be able to be selectively attached to the trolley, so as to assemble the support frame on the trolley.

The anchoring means comprise at least a pair of front clamps, adjustable and attachable to the front edge of the trolley, and at least a pair of rear or lateral clamps, each adjustable and attachable to a relative lateral edge of the trolley.

In this way, the whole seating device is completely independent from the trolley and can be assembled upon it as an external element, by means of the adjustable anchoring means.

With the present invention, thanks to the adjustable anchoring means, the trolley can be substantially of any type, shape or size, even standardized, therefore without affecting the production costs of the latter.

Therefore, the trolley can keep its original characteristics for containing the product.

Moreover, in the event that the seating device breaks, it can be selectively replaced independently, without affecting and/or compromising the functioning or use of the trolley.

According to a variant, the attachment means are constrained telescopically to the support frame, so as to allow them to be adjusted with respect to the support frame, also according to the shape and size of the trolley on which the seating device is mounted.

According to another variant, the attachment means comprise at least a clamping member, for example a screw, conformed so as to be able to be constrained to the trolley and to be selectively clamped to the latter, to guarantee the safe positioning of the support frame on the trolley.

According to a variant, a structure that partly covers the seating portion is associated with the support frame. The covering structure is conformed to define a toy-vehicle, for example an automobile, a truck, but also an animal like a horse, an elephant or other, so as to stimulate the child to play while the adult is choosing and purchasing the products.

Since the seating device according to the present invention is independent from the trolley on which it is assembled, it can be selectively detached and substantially replaced by others, for example, even for the sole need of replacing the covering structures and the toys they define, according to seasonal or sporting events or other.

Advantageously, the seating device according to the present invention is assembled on the front upper part of a containing basket of a shopping trolley of the traditional type, so as to keep the products chosen and deposited in the basket far from the child's reach.

### BRIEF DESCRIPTION OF THE DRAWINGS

These and other characteristics of the present invention will become apparent from the following description of a preferential form of embodiment, given as a non-restrictive example with reference to the attached drawings wherein:

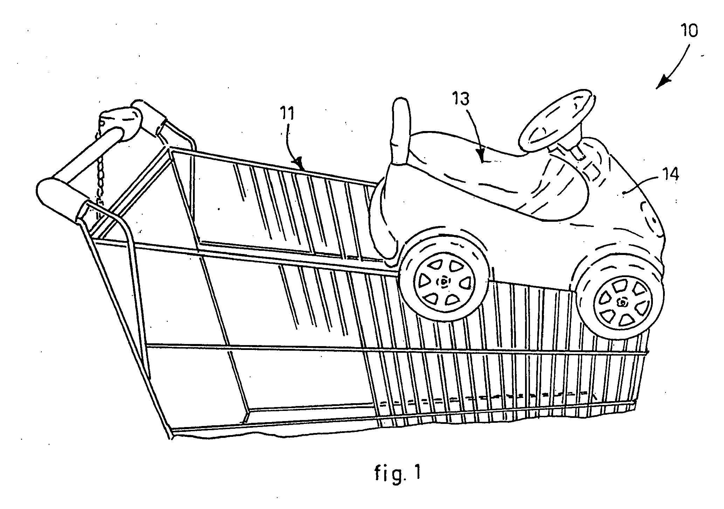

- fig. 1 shows a seating device according to the present invention applied to a shopping trolley;

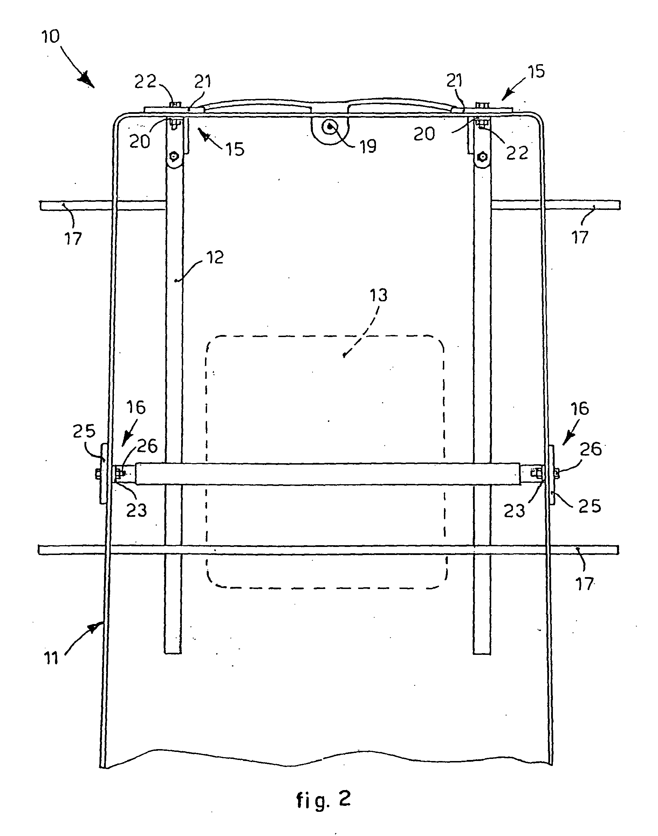

- fig. 2 shows the seating device in fig. 1 from below;
- fig. 3 shows an enlarged first detail of fig. 2;
- fig. 4 shows an enlarged second detail of fig. 2.

### DETAILED DESCRIPTION OF A PREFERENTIAL FORM OF EMBODIMENT

With reference to the attached drawings, a seating device 10 according to the present invention is assembled on a shopping trolley 11 of a substantially traditional type.

In this case, the seating device 10 comprises a support frame 12, a seat 13 for the child and a partial cover 14 for the seat 13, in this case in the form of a toy automobile.

The support frame 12 comprises two connection profiles, disposed in a direction substantially longitudinal to the device 10, two front anchoring clamps 15 and two rear or lateral anchoring clamps 16.

In particular, the front clamps 15 anchor on the front edge of the trolley 11, while the rear or lateral clamps 16 anchor on the lateral flanks of the trolley 11.

In this case, the support frame 12 also comprises, integrated therewith, four axles 17 on which the wheels pivot, and a steering column 19 for the steering wheel of the toy-automobile defined by the cover 14.

The two front anchoring clamps 15 are suitable, as we said, to be constrained and clamped on a front edge of the shopping trolley 11 and each comprises a fixed bracket 20 and a movable block 21 connected to each other by a clamping screw 22.

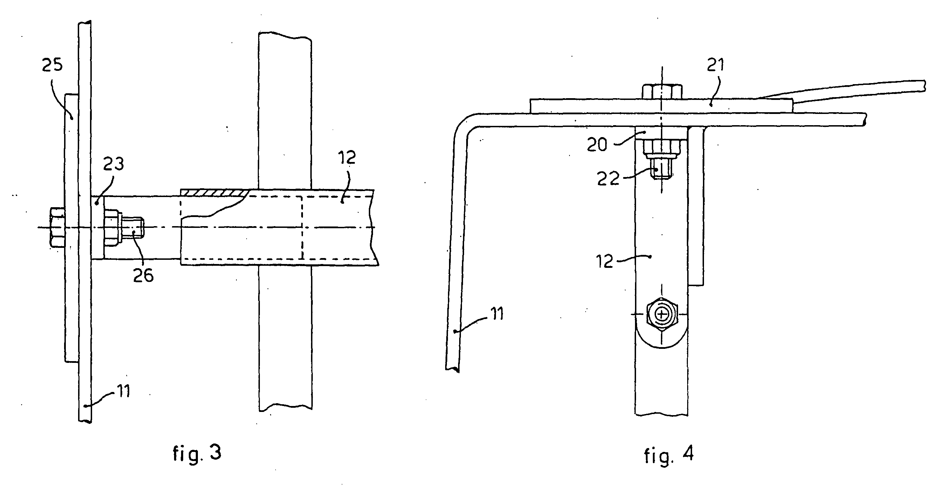

As shown in the detail in fig. 4, the front edge of the shopping trolley 11 is clamped between the fixed bracket 20, internally, and the movable block 21, externally. The clamping screw 22 allows to exert a closing force by the fixed bracket 20 and the movable block 21 with respect to the front edge of the shopping trolley 11.

In this way, the support frame 12 is firmly attached to the front edge of the shopping trolley 11.

The two rear or lateral clamps 16 are suitable to be constrained and clamped on a respective lateral edge of the shopping trolley 11.

Each rear anchoring clamp 16 comprises a fixed bracket 23 and a movable block 25 connected to each other by a clamping screw 26.

As shown in the detail in fig. 3, each lateral edge of the shopping trolley 11 is clamped between the fixed bracket 23, internally, and the movable block 25, externally. The clamping screw 26 allows to exert a closing force by the fixed bracket 23 and the movable block 25 with respect to the relative lateral edge of the shopping trolley 11.

In this way, the support frame 12 is firmly attached to the relative lateral edge of the shopping trolley 11.

In particular, each fixed bracket 23 is mounted telescopically with respect to the support frame 12, so as to be able to selectively assume a plurality of positions between a collected position and an extended position with respect to the support frame 12.

In this way it is possible to vary the distance between the support frame 12 and the fixed bracket 23, so as to position the latter in a position adjacent to the relative lateral edge of the shopping trolley 11.

In this way, whatever the lateral sizes of the shopping trolley 11 may be, the seating device 10 can be firmly mounted on the trolley 11.

It is clear, however, that modifications and/or additions of parts may be made to the seating device 10 as described heretofore, without departing from the field and scope of the present invention.

For example, it comes within the field of the present invention to provide that elastic means are associated to the rear anchoring clamps 16, but also, possibly, to the front anchoring clamps 15, which elastic means allow to optimize the conditions of positioning and attaching the support frame 12 on the shopping trolley 11.

It also comes within the field of the present invention to provide that instead of the front 15 and/or rear 16 anchoring clamps, different anchoring members can be provided, other than those described here as examples. For example, grippers or snap-in or spring-type hooks may be provided, or other types, and also magnetic, elastic or other systems may be provided, which allow the support frame 12 to be securely attached to the shopping trolley 11.

It also comes within the field of the present invention to provide, on the lower part of the support frame 12, one or more footboards or foot rests, so that the child can rest his feet upon them when he is seated on the seat 13.

It is also clear that, although the present invention has been described with reference to some specific examples, a person of skill in the art shall certainly be able to achieve many other equivalent forms of seating device for a trolley, having the characteristics as set forth in the claims and hence all coming within the field of protection defined thereby.

## Claims

1. Seating device for a trolley (11), comprising at least a seating portion (13) and at least a support frame (12) on which said seating portion (13) is housed, **characterized in that** it comprises anchoring means (15, 16) of the adjustable type and conformed to be able to be selectively attached to the trolley (11), in order to mount said support frame (12) on the trolley (11), said anchoring means comprising at least a pair of front clamps (15), adjustable and attachable to the front edge of the trolley (11), and at least a pair of rear or lateral clamps (16), each adjustable and attachable to a relative lateral edge of the trolley (11).

2. Seating device as in claim 1, **characterized in that** the anchoring means (15, 16) are constrained in a telescopic manner to the support frame (12), so as to be able to be adjusted with respect to the support frame (12) depending on the dimensions of the trolley (11).

3. Seating device as in claims 1 or 2, **characterized in that** the anchoring means comprise at least a clamping member, conformed to be able to be constrained to the trolley (11) and to be selectively clamped thereon.

4. Seating device as in claim 3, **characterized in that** it comprises a fixed bracket (23) and a movable block (25), connected to each other by means of a clamping screw (26).

5. Seating device as in any claim hereinbefore, **characterized in that** a cover structure (14) is associated to the support frame (12) to at least partly cover the seating portion (13), and conformed to define a toy.

6. Seating device as in claim 5, **characterized in that** said toy simulates an automobile, and **in that** said frame (12) supports in a single body axles (17) on which the wheels pivot and a steering column (19) for the steering wheel of said automobile.

## Patentansprüche

1. Sitzvorrichtung für einen Schiebewagen (11), umfassend mindestens einen Sitzteil (13) und mindestens einen Tragrahmen (12), auf dem der Sitzteil (13) untergebracht ist, **dadurch gekennzeichnet, dass** sie Verankerungsmittel (15, 16) umfasst, die des einstellbaren Typs sind und so ausgebildet sind, dass sie dazu fähig sind, selektiv am Schiebewagen (11) befestigt zu werden, um den Tragrahmen (12) auf dem Schiebewagen (11) zu montieren, wobei die Verankerungsmittel mindestens ein Paar vordere Klemmen (15), die auf den vorderen Rand des Schiebewagens (11) einstellbar und an diesem befestigbar sind, und mindestens ein Paar hinterer oder seitlicher Klemmen (16) umfasst, die jeweils auf einen relativ seitlichen Rand des Schiebewagens (11) einstellbar und an diesem befestigbar sind.

2. Sitzvorrichtung nach Anspruch 1, **dadurch gekennzeichnet, dass** die Verankerungsmittel (15, 16) in einer teleskopischen Art und Weise an dem Tragrahmen (12) angebracht sind, so dass sie dazu fähig sind, bezüglich des Tragrahmens (12) je nach den Abmessungen des Schiebewagens (11) eingestellt zu werden.

3. Sitzvorrichtung nach Anspruch 1 oder 2, **dadurch gekennzeichnet, dass** die Verankerungsmittel mindestens ein Spannelement umfassen, das dazu ausgebildet ist, an dem Schiebewagen (11) angebracht und auf diesem selektiv festgespannt zu werden.

4. Sitzvorrichtung nach Anspruch 3, **dadurch gekennzeichnet, dass** sie einen festen Bügel (23) und einen beweglichen Block (25) aufweist, die mittels einer Spannschraube (26) miteinander verbunden sind.

5. Sitzvorrichtung nach einem der vorhergehenden Ansprüche, **dadurch gekennzeichnet, dass** dem Tragrahmen (12) eine Abdeckstruktur (14) zugeordnet ist, um den Sitzteil (13) teilweise abzudecken, und dieser so ausgebildet ist, dass er ein Spielzeug definiert.

6. Sitzvorrichtung nach Anspruch 5, **dadurch gekennzeichnet, dass** das Spielzeug ein Automobil nachahmt, und **dadurch** dass der Rahmen (12) in einem einzigen Körper Achsen (17), auf denen die Räder drehbar sind, sowie eine Lenksäule (19) für das Lenkrad des Automobils trägt.

## Revendications

1. Dispositif de siège destiné à un chariot (11), comprenant au moins une partie d'assise (13) et au moins un châssis de support (12) sur lequel ladite partie d'assise (13) est logée, **caractérisé en ce qu'**il comprend des moyens d'ancrage (15, 16) de type réglable et conformés de manière à pouvoir être sélectivement attachés au chariot (11), afin de monter ledit châssis de support (12) sur le chariot (11), lesdits moyens d'ancrage comportant au moins une paire de pinces avant (15), réglables et pouvant être fixées au bord avant du chariot (11), et au moins une paire de pinces arrières ou latérales (16), chacune réglable et pouvant être fixée à un bord latéral relatif du chariot (11).

2. Dispositif de siège selon la revendication 1, **caractérisé en ce que** les moyens d'ancrage (15, 16) sont rigidement accouplés de manière télescopique au châssis de support (12), de manière à pouvoir être ajustés par rapport au châssis de support (12) en fonction des dimensions du chariot (11).

3. Dispositif de siège selon les revendications 1 ou 2, **caractérisé en ce que** les moyens d'ancrage comprenant au moins un organe de serrage, conformé de manière à pouvoir être rigidement accouplé au chariot (11) et à être sélectivement serré dessus.

4. Dispositif de siège selon la revendication 3, **caractérisé en ce qu'**il comprend un support fixe (23) et un bloc mobile (25), connectés entre eux au moyen d'une vis de serrage (26).

5. Dispositif de siège selon l'une quelconque des revendications précédentes, **caractérisé en ce qu'**une structure de couverture (14) est associée au châssis de support (12) pour couvrir au moins partiellement la partie d'assise (13), et conformée pour définir un jouet.

6. Dispositif de siège selon la revendication 5, **caractérisé en ce que** ledit jouet simule une automobile, et **en ce que** ledit châssis (12) supporte un élément d'essieux simple (17) sur lequel les roues pivotent et une colonne de direction (19) pour le volant de ladite l'automobile.
